# EUROPEAN PATENT SPECIFICATION

(11) **EP 3 379 948 B1**
(45) Date of publication and mention of the grant of the patent: **14.04.2021**
(21) Application number: 16867493.5
(22) Date of filing: 25.11.2016
(51) Int. Cl.: A24B 15/12, A24C 5/56, A23P 30/00, D21H 11/12, D21H 15/06, D21H 17/01

(54) **STRUCTURALLY ENHANCED AGRICULTURAL MATERIAL SHEETS AND THE METHOD OF PRODUCING THE SAME**
STRUKTURELL VERBESSERTE LANDWIRTSCHAFTLICHE MATERIALBAHNEN UND VERFAHREN ZUR HERSTELLUNG DAVON
FEUILLES DE MATÉRIAU AGRICOLE À STRUCTURE AMÉLIORÉE ET LEUR PROCÉDÉ DE PRODUCTION

(30) Priority: 26.11.2015 US 201562260286 P
(43) Date of publication of application: 03.10.2018
(73) Proprietor: FPInnovations, Pointe-Claire, Québec H9R 3J9 (CA)
(72) Inventor: BEN, Yuxia, Kirkland, Québec H9H 5E3 (CA); HUA, Xujun, Kirkland, Québec H9H 5E3 (CA); RICARD, Michelle, Pointe-des-Cascades, Québec J0P 1M0 (CA); WANG, Xiaoyu, St-Laurent, Québec H4L 3V3 (CA)
(74) Representative: Agasse, Stéphane
(86) International application number: PCT/CA2016/051393
(87) International publication number: WO 2017/088063

(56) References cited:
- CA-C- 2 799 123
- CA-C- 2 824 191
- KR-B1- 101 442 102
- US-A- 4 306 578
- AZEREDO, H.M.C. ET AL.: 'Nanocomposite edible films from mango puree reinforced with cellulose nanofibers' JOURNAL OF FOOD SCIENCE vol. 74, no. 5, 2009, pages N31 - N35, XP055386483

## Description

### BACKGROUND OF THE INVENTION

### Field of the Invention

The present invention relates to a structurally enhanced agricultural product containing cellulose filaments (CF) having at least an improved wet-web strength; and a method for producing the structurally enhanced agricultural material sheets.

### Description of the Prior Art

Sheet making with agricultural materials have been widely used to produce food, tobacco and other products. Sheet made from seaweed, known as Nori, is commonly used as a wrap for sushi and onigiri. The typical seaweed is edible species of the red algae genus *Porphyra.* Nori is mostly made by a papermaking process with highly automated machines. However, the forming section uses many framed square screens so it does not form a continuous sheet roll. The final product is individual paper-thin, black and dried sheets. Other sheet-shaped vegetables products exist commercially. The raw materials for the sheets can be various types of leafy vegetables, root crops, fruity vegetables, fruits, etc. Sheets made from grain crops are also common for food preparation, such as rice paper. These sheets after drying are very brittle, and often because of lack of fibrous materials, they are difficult to handle. To achieve tougher sheets that resist tearing or breaks, Cho Won-II discloses, in WO 2000/024271 A1, a method of making vegetable sheets by spraying a gel onto the sheets. McHugh et al. use edible polymers such as starch and editable fibers including wood fibers to provide desired strength and/or crispness to vegetable and fruit sheets (US 2012/0258206 A1).

Most agriculture materials are difficult to transform into a sheet form with the conventional papermaking process because they cannot form a coherent sheet with sufficient strength in a wet state. A sheet with poor wet-web strength would not allow the sheet to be drawn through a paper machine without breaking. Wet-web strength in this context is the tensile strength of a web at wet state before the moisture contained in the web is substantially removed to a level above 85-90%. To improve wet-web strength, cellulose fibers are often added to agricultural material sheets prior to a papermaking process. Seed paper is one example where cellulose fibers function as a carrier for agriculture seeds. The seeds embedded in wood fibers can germinate after the paper is planted in soil. The seed paper is also used for greeting cards and decoration. Reconstituted tobacco leaf (RTL) is another example where cellulose fibers are used as an important ingredient.

The early processes for manufacturing tobacco sheets were disclosed more than one century ago (US 328,300; US 611,107; US 888,743). These processes were actually the same as papermaking process used for the manufacture of paper products. Since then, other approaches for manufacturing reconstituted tobacco leaf were also developed, such as roll pressing (US 4,646,764 A), casting (US 3,464,422; US 4,306,578 A) and dry forming process (CA 1,235,974 A1). Among these approaches, papermaking process is the most advanced and widely used with high manufacturing efficiency and end product quality (US 3,097,653; US 4,182,349 A; WO 2008/110932 A2; US 4,421,126; US 4,681,126; CN 102,845,827 B; US 4,270,552). To reclaim remnants of virgin tobacco in cigarette manufacturing, reconstituted tobacco leaf is now widely used in the tobacco industry. Because the remnants are extracted with hot water prior to the papermaking process, the reconstituted tobacco leaf sheet product contains less harmful constituents, such as tar and nicotine, than the tobacco leaf used in cigarette (US 9,016,286 B2; CN 101,606,749 B, CN 201,846,778 U). As such, the inclusion of reconstituted tobacco leaf in combination with tobacco leaf is used as a way of reducing harmful constituents in the final cigarette product.

Modern processes for reconstituted tobacco leaf mainly consist of pulping of tobacco by-products (stalks, stems, scraps, fine-cuts, etc.), their extraction with aqueous liquid, refining of fibrous materials, wet-web forming, pressing, pre-drying, coating and after-drying using a paper machine. The produced reconstituted tobacco sheet are then further shredded to small pieces and packed before delivering to a cigarette manufacturer, where the reconstituted tobacco leaves are mixed with natural tobacco leaves for cigarette production or used as sheet wrapper for cigar or other similar products.

In the extraction stage of the process, many harmful materials are removed from the tobacco leaves and remnants. Only a small portion of the extractives, combined with other flavor control additives, is added back to the tobacco sheet in the subsequent coating stage (US 9,016,286 B2; CN 101,606,749 B; CN 201,846,778 U). Thus, the harmful materials in reconstituted tobacco sheet can be reduced and/or controlled using the reconstituted tobacco leaf process. To alleviate the impact of smoking to human health, many countries have regulation requiring gradual reduction of the maximum allowable tar and nicotine contents in tobacco products. For this reason and also due to public awareness of health issue relating to smoking, more and more reconstituted tobacco leaf is used in the cigarette manufacture.

Like many other agriculture materials, the pulp made from tobacco leaf and its remnants does not have a high amount of fibrous materials with high bonding capability, especially in the wet-stage. Tobacco fibers are typically weaker and shorter with a much lower aspect ratio (length to width ratio) than wood or other plant fibers like flax and hemp. Incorporation of a mineral filler (e.g. calcium carbonate) in the reconstituted tobacco leaf further weakens the bonding between the fibers. The low wet-web strength causes sheet breaks at the machine wet-end and also during and after coating treatment in the reconstituted tobacco leaf making process. By consequence, it is difficult to produce reconstituted tobacco leaf from pure tobacco pulp by the conventional papermaking process because of its low wet-web strength. To improve the wet-web strength of a tobacco sheet, cellulose fibers from wood and other plants are applied to the refined tobacco pulp slurry (US 5,322,076 A; CA 2,574,826; CN 104,256,881 A, WO 2008/110932 A2; CN 102,266,116 B; WO 2002/003817 A2; CN 103,263,073 A). The addition rate of cellulose fibers is typically from 5 to 20% based on total solids of the manufactured tobacco sheet.

Despite the addition of cellulose fibers, the wet-web strength of the tobacco sheet is still not sufficient for a high speed machine. The reconstituted tobacco leaf machine speed is still limited, to a level as low as -80 m/min. The low machine speed reduces machine efficiency and production rate, and also increases the cost of reconstituted tobacco leaf.

Although wood fibers and other cellulose fibers improve the strength of reconstituted tobacco leaf and other agriculture sheets, their usage is limited because a high content of cellulose fibers adversely affect the taste of agricultural material sheets as food or smoking substance.

Wang, L. et al (China Pulp & Paper, 32(9) p35-39, 2013) reported that microfibers can be used to reduce the amount of wood fibers used in making reconstituted tobacco leaf. These microfibers consisted of the fines portion of bleached softwood kraft pulp refined with a Valley beater. The fines obtained from the Valley beater had a length of 0.35 to 0.81 mm, a width of 0.033 to 0.035mm. It is claimed that these microfibers can replace about 25% of the wood fibers used.

Yong, R. J. et al (KR 101442102 B1) disclosed a method to improve filling power of the reconstituted tobacco sheet by applying nanofibrillated cellulose to reconstituted tobacco leaf manufacturing process. The nanofibrillated cellulose was made by grinding or using a homogenizer, in a way very similar to those disclosed earlier (US 4,374,702; US 6,183596; US 6,214,163, *Tangigichi and Okamura, Fourth European Workshop on Ligocellulosic and Pulp, Italy,* 1996). The nanofibrillated cellulose made from these devices consists of either shortened fibers with branched micro- or nano-fibrils, or individual short nanofibrils in the sub-micron range. In Yong's method, nanofibrillated cellulose is either added to sizing liquid, or to tobacco suspension prior to application on a Fourdrinier machine, or spayed onto a forming wire. The use of nanofibrillated cellulose improves the strength and stiffness of the dry reconstituted tobacco leaf. The increased dry strength and stiffness helps the filling power of the reconstituted tobacco leaf produced in the subsequent cigarette manufacturing.

Both methods mentioned above improve the dry strength of reconstituted tobacco leaf, and reduce its softness or increase its stiffness. However, excess high dry strength and stiffness are actually not desirable for the subsequent process in cigarette manufacturing (Wang, L. et al., China Pulp & Paper, 32(9) p35-39, 2013*).* For example, the dry tensile strength of a reconstituted tobacco leaf should not exceed 1.00 kN/m according to the Chinese Tobacco Standard (YC/T 16.3-2003). In addition, there is no information on whether microfibers or nanofibrillated cellulose improves the wet-web strength of tobacco sheets.

Therefore, it is highly desirable to develop a new tobacco sheet with sufficient wet-web strength to allow it to be run on a high speed machine, while maintaining the dry strength or only modestly improving it. Furthermore, there are clear needs to develop a method to improve the wet-web strength of other vegetable and crop sheets while limiting the amount of inclusion of the conventional wood fibers as these fibers possess some negative effects on the taste, aroma, and chewiness of the edible sheets.

### SUMMARY OF THE INVENTION

In accordance with one aspect of the present invention, there is provided a method of producing a structurally enhanced agricultural material sheet according to claim 1.

The slurry may comprise a weight ratio of less than 20 wt% of CF to the weight of CF or CF-containing cellulose fibers and the agricultural material on a dry basis.

The sheet forming device may be beis a paper machine.

The paper machine may be a high speed paper machine operating at a speed of more than 80 m/min.

In accordance with an embodiment of the present invention, there is provided the method herein described, wherein the structurally enhanced agricultural material comprises a characteristic flavour of the agricultural material.

In accordance with an embodiment of the method herein described, the agricultural material is rice.

In accordance with still a further embodiment of the method herein described, the agricultural material is seaweed.

Providing the agricultural material may comprises processing the agricultural material through cooking, macerating, pickling, pasteurization, fermentation, curing, roasting, drying, pulping, disintegrating, dispersing, grinding, refining, homogenizing, extracting components from or combinations thereof.

In accordance with an embodiment of the present invention, there is provided the method herein described, wherein the providing of the CF or CF-containing cellulose fibers is in a never-dried state, an aqueous slurry, or is in a dry state.

In accordance with an embodiment of the present invention, there is provided the method herein described, wherein the weight ratio of the CF to the agricultural material is less than 50:50 based on weight of dry solids.

In accordance with an embodiment of the present invention, there is provided the method herein described, wherein the weight ratio of the CF to the agricultural material is between 0.1: 99.9 to 20:80 based on dry solids.

In accordance with an embodiment of the present invention, there is provided the method herein described, wherein the weight ratio of the CF to the agricultural material is between 0.5:99.5 to 10:90 based on dry solids.

In accordance with another aspect of the present invention, there is provided a structurally enhanced agricultural material sheet according to claim 7.

In accordance with an embodiment of the present invention, there is provided the material herein described, wherein the structurally enhanced agricultural material comprises a characteristic flavour of the agricultural material.

In accordance with a further embodiment of the material herein described, the agricultural material is rice.

In accordance with yet a further embodiment of the material herein described, the agricultural material is seaweed.

In accordance with an embodiment of the present invention, there is provided the material herein described, wherein providing the agricultural material comprises cooking, macerating, pickling, pasteurization, fermentation, curing, roasting, drying, pulping, disintegrating, dispersing, grinding, refining, homogenizing, extracting or combinations thereof the agricultural material.

In accordance with an embodiment of the present invention, there is provided the material herein described, wherein the providing of the CF or CF-containing cellulose fibers is in a never-dried state, an aqueous slurry, or is in a dry state.

In accordance with another aspect of the present invention, there is provided a method of producing a structurally enhanced reconstituted tobacco leaf according to claim 12.

In accordance with an embodiment of the present invention, there is provided the method herein described, wherein the slurry comprises a weight ratio of less than 20 wt% of CF to the weight of CF or CF-containing cellulose fibers and the agricultural material on a dry basis.

In accordance with an embodiment of the present invention, there is provided the method herein described, wherein the sheet forming device is a paper machine.

In accordance with an embodiment of the present invention, there is provided the method herein described, wherein the paper machine is a high speed paper machine operating at a speed of more than 80 m/min.

In accordance with an embodiment of the present invention, there is provided a structurally enhanced tobacco sheet comprising: a tobacco pulp made of tobacco leaf and remnants; and a CF or CF-containing cellulose fibers.

In accordance with one aspect of the present invention, there is provided a novel agricultural product in sheet form, or henceforth an agricultural material sheet, comprising agricultural materials and cellulose filaments (CF). The CF are fine filaments made from cellulose fibers, and have widths in the submicron and lengths from tens of micrometer to a few millimeters. The methods of CF production have been disclosed by Hua et al. in US 2011/0277947 A1 and US 9,051 ,684

In accordance with one embodiment of the present invention, there is provided the method herein described, wherein the never-dried or dried CF or CF-containing cellulose fibers are dispersed in aqueous suspension by a dispersion unit, such as a helico pulper, a hydropulper, a deflaker, or a disk refiner.

In accordance with another embodiment of the present invention, there is provided the method herein described, therein the CF or CF-containing cellulose fibers significantly improves the wet-web strength of agricultural material sheets.

In accordance with yet another embodiment of the present invention, there is provided the method herein described, therein the CF or CF-containing cellulose fibers improves the wet-web strength of agricultural material sheets much more than its dry strength.

In accordance with a further embodiment of the present invention, CF and/or CF-containing cellulose fibers may be introduced to agriculture materials in the manufacturing process before the forming section of a paper machine.

In accordance with yet another embodiment of the present invention, the agriculture sheet could be reconstituted tobacco sheet, seaweed sheet, vegetable sheet, rice paper, or the like articles. The reconstituted tobacco sheet could be used alone, or mixed with natural tobacco leaf to make cigarettes, cigars or the like articles, or used as wrapper for cigars or the like articles.

### BRIEF DESCRIPTION OF THE DRAWING

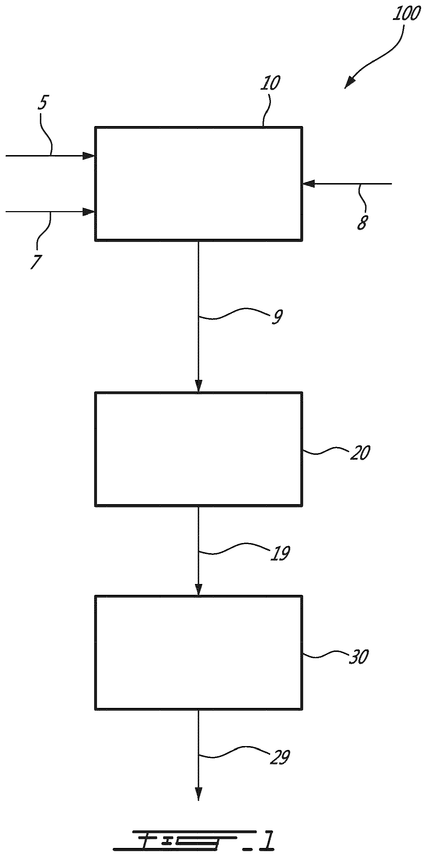

Fig. 1 is a block diagram of a method for making a structurally enhanced agricultural material according to one embodiment of the present invention.

### DETAILED DESCRIPTION OF THE INVENTION

Unless otherwise indicated, the definitions and embodiments described in this and other sections are intended to be applicable to all embodiments and aspects of the present disclosure herein described for which they are suitable as would be understood by a person skilled in the art.

As used in the present disclosure, the singular forms "a", "an" and "the" include plural references unless the content clearly dictates otherwise.

Terms of degree such as "about" and "approximately" as used herein mean a reasonable amount of deviation of the modified term such that the end result is not significantly changed. These terms of degree should be construed as including a deviation of at least ±5% or at least ±10% of the modified term if this deviation would not negate the meaning of the word it modifies.

In the context of this invention, agricultural material sheet means a flat, thin piece of mass made from agriculture materials, which comprise, but not limit to, vegetables, fruits, rice or other cereal grains, seaweed or other algae, fungus, aquatic plants, tobacco, tea, and coffee plants, or any other cultivated plants. The agricultural materials used could be the whole or only some parts of the plants, such as their leaves, seeds, fruits, flowers or stems. The agricultural materials could be either at their original state or after certain processes, such as cooking, macerating, pickling, pasteurization, drying, fermentation, curing, and roasting etc. They may contain certain additives, such as flavorings, sweeteners, coloring and aroma additives, preservatives, processing aids, and/or mineral fillers etc. The agricultural material sheets can be either editable or not editable, and can be used as is, or further processed to produce various consumer products. Nori and reconstituted tobacco leaf are two examples of such agricultural material sheets.

Agricultural material sheets are typically made by using a sheet forming device. A sheet forming device may comprise a screen, or a plate on which a wet sheet is formed. The wet sheet is then dewatered and/or dried by drainage, pressing, evaporation or combination thereof to produce a dry sheet. A typical sheet forming device is a paper machine which can produce either a long continuous sheet or individual pieces. In a preferred embodiment of the present invention the paper machine is a high speed paper machine operating at a speed of above 80 m/min.

Wet-web strength means the tensile strength and tensile energy absorption of a wet sheet formed from agricultural materials before the moisture is fully removed by pressing and/or evaporation. The wet-web strength typically increases with web solids content. As mentioned earlier, a weak wet-web may break easily as the web runs through a paper machine. Typically, wet-web strength at a solids content between 20 - 70% is critical to avoid web breaks in the process.

The dry strength of a sheet is the strength after the sheet is dried and its moisture content reaches equilibrium in a room where the relative humidity is controlled at 50% at 23°C.

One objective of this invention is to provide a novel agricultural material sheet with substantially improved wet-web strength.

Another objective of this invention is to provide a method to produce agricultural material sheets with substantial improvement in wet-web strength yet with only limited or modest improvement in dry strength.

Further objective of this invention is to provide a method to produce the agricultural material sheets with substantially reduction or elimination of an addition of wood fibers or other fibers.

Accordingly, we have discovered that an agricultural material sheet containing CF, or CF-containing cellulose fibers possesses a high wet-web strength. We have also discovered, surprisingly however, that the CF only leads a modest increase in dry strength of the agricultural material sheets, much lower than the improvement achieved in their wet-web strength.

We have also discovered that applying CF can reduce significantly, or even eliminate the use of the conventional wood fibers or other plant fibers in agricultural material sheets. Surprisingly, at a given increase in wet-web strength, the improvement in dry strength brought by CF is lower than that brought by the conventional wood fibers or other plant fibers. A moderate level of dry strength is often desirable for agricultural material sheet. For example, excess high dry strength of reconstituted tobacco sheets would negatively affect the subsequent processes for cigarette production.

Another advantage of using CF is its low dosage requirement. To reach a given wet-web strength of agricultural material sheets, the dosage of CF is substantially lower than that of the conventional fibers, such as kraft wood pulps. A low content of cellulose fibers in agricultural material sheets is desirable because cellulose fibers may negatively affect the taste, aroma or chewiness of food, beverage or smoking products.

We have further discovered that applying CF to agricultural materials before sheet making improves retention of the fine particles of the agricultural materials and mineral filler when a sheet forming device comprising a screen, a wire mesh, or a forming fabric is used to form the sheet.

"Structurally enhanced" agricultural material is defined herein as an agricultural material having improved physical properties as compared with the non-enhanced material and specifically enhanced wet web strength, so that the enhanced agricultural material may be used on paper making machines, and preferably on high speed paper making machines operating at speeds equal to or greater than 80 m/minute. For greater clarity, structural enhancement is defined as including the CF or CF-containing cellulose fibers herein described, to the agricultural material in a preferred embodiment only CF is used.

A characteristic flavour or characteristically flavoured agricultural material is defined herein as an agricultural material that is structurally enhanced with the CF or CF-containing cellulose fibers, while retaining the native or characteristic flavour of the agricultural material before enhancement.

% Solids contents is defined herein a percentage of total solids including agricultural material, CF or CF-containing cellulose fibers and other additives if any per aqueous phase.

Fig. 1 illustrates a method 100 of producing a structurally enhanced agricultural material sheet 19 according to one embodiment of the present invention.

An agricultural material 5 is provided that is selected from vegetables, fruits, rice seaweed, fungi, aquatic plants, tobacco, tea, coffee, and combinations thereof. The agricultural material 5 may be provided in a native form, or after certain processes, such as cooking, macerating, pickling, pasteurization, drying, fermentation, curing, and roasting etc, or may be pre-processed through pulping, disintegrating, dispersing, grinding, refining, homogenizing, drying, extracting components or combinations thereof the agricultural material.

A CF or CF-containing cellulose fiber 7 is provided. This CF or CF-containing cellulose fibers 7 have an aspect ratio of at least 200 or greater, and they are free of chemicals, chemical modification or derivitization. The CF or CF-containing cellulose fibers 7 may be provided in a variety of forms particularly as in a never-dried state, in an aqueous slurry, or in a dry state, such as dry lap, flake, or particles.

In step 10 of preparing the agricultural material slurry 9, the agricultural material 5 and the CF or CF-containing cellulose fibers 7 are added to water 8. The slurry 9 comprises a weight ratio of the CF or CF-containing cellulose fibers 7 to the blend of CF or CF-containing fibers 7 and agricultural material 5 of less than 90% based on dried solids. Preferred ratios of the CF or CF-containing cellulose fibers 7 to the blend are from 0.1% to 20% based on dried solids, where more preferred ratio is 0.5% to 10% based on dried solids.

In step 20, the slurry 9 is transferred to a sheet forming device that in a preferred embodiment is a paper machine where the structurally enhanced agricultural material sheet 19 is produced. In a particularly preferred embodiment the paper machine is a high speed paper machine operating at a speed of 80 m/min or more.

The structurally enhanced agricultural material sheet 19 can be further processed in step 30. This further processing may include but is not limited to coating, drying, cutting, disintegrating, packaging and combinations thereof. The sheet 19 or the processed sheet 29 due to their low CF binder composition have a characteristic flavour of the agricultural material 5 from which they derive.

The terms "cellulose filaments" or "CF" and the like as used in the present invention refer to fine filaments made from cellulose fibers, and have widths of 30 to 500 nm and lengths of at least 10 micrometers. CF has a very high aspect ratio, at least 200, up to thousands, and also has a high surface area. More details on CF can be found in two patent disclosures by Hua et al. US 2011/0277947 A1 and US 9,051,684. The methods of CF production have also been disclosed by the two patents. The methods producing CF are purely mechanical, and do not require any chemicals or additives, whether they are reactive or not, although some chemicals can be used in the process if needed for certain applications. Furthermore the methods do not chemically modify the cellulose during the CF production. CF free of chemicals and chemical derivatization provides advantages when used in food products, because of food safety and possible taste issues.

CF produced by the methods mentioned above can be used as is, i.e. or as a never-dried CF. The never-dried CF are cellulose filaments that have never been dried and have remained in a wet state with up to 60% solids by weight after their production. In this case, CF may be re-pulped or dispersed first, and then mixed with agricultural materials before making sheets. The agricultural materials may be pulped, disintegrated, dispersed, grounded, refined, homogenized, extracted or be submitted to any other processes as needed before mixing with CF. The well dispersed CF may be metered into any stage of processing the agricultural material, but before sheet has been formed. When the conventional papermaking process is used for producing agricultural material sheets, CF may be added before or into the pulper, the storage tanks, the blending chest, the machine chest, the fan pumps, before or after the screen, before the headbox, or into the whitewater system.

Alternatively, CF and agricultural materials may be mixed together before being submitted to the subsequent pulping, dispersion, disintegration, grounding, refining, homogenization, extraction or other processes. An advantage of this alternative may allow CF to be dispersed more thoroughly in the agricultural materials, or may simplify the process since the re-pulping or dispersion stage of CF may be eliminated.

To reduce the cost of transportation, CF may be dried by itself, or as a film (WO 2014/071523 A1), or using carrying fibers (US-2016319482 ). The dry CF may need to be well dispersed before use according to the corresponding dry methods as described in the patent applications mentioned above . Dry CF after proper dispersion may be mixed with agricultural materials in the same way as the never-dried CF.

The ratio of CF versus to agriculture materials ranges from about 0.02/99.98 to about 90/10, preferably from about 0.1/99.9 to about 20/80, most preferably from the range of about 0.5/99.5 to about 10/90. The ratios are all weight based on oven-dried solids of the materials.

As mentioned earlier, agricultural materials often do not contain sufficient amount of fibrous matter with a good self-bonding capability, especially in their wet state. It is difficult to form coherent sheets from these materials, and the wet sheets would be very difficult to handle with and be easily broken. Applying CF to these materials according to the present invention helps to form strong and coherent agricultural material sheets, increases their wet-web strength, and improves the efficiency of sheet forming process.

When a modern papermaking process is used to form agricultural material sheets, the wet web must be drawn through all sections of the paper machine at high speed. Drawing sheet creates tension and may break the wet-web. The tension increases with increasing machine speed, while the wet-web strength decreases with increasing sheet moisture content. A break occurs when sheet tension exceeds the wet-web strength. A typical paper machine comprises: forming, pressing, drying, coating, after-drying, and reeling sections. The moisture content typically decreases along the process, except in the coating section where moisture level may increase due to applying a wet coating layer. Thus, wet-web is weaker at the earlier sections of a paper machine, where web has a higher chance to break. Although some newer machines may have a felt support of the wet web along the various machine sections which reduces web breaks, most machines still have open draws between couch roll, press rolls, dry cans. Thus a high wet-web strength brought by CF allows the wet-web to drawn through all sections of a paper machine without breaks, and also allows the machine to run at a higher speed. Reduction in breaks and increase in machine speed improves machine efficiency and increases productivity of agricultural material sheets.

While it is not the intention to be bound by any particular theory regarding the present invention, it is perceived that the high wet-web strength brought by CF is due to its high surface area, and long and thin filament size. At a given moisture content of a wet-web, there is more surface to attract free water molecules when CF is present. Thus less water is left in the interfaces between particular and fibrous agricultural materials of a wet-web, which in turn increases the friction force between the interfaces when the web is under tension. Long filaments should also help this interface friction force, so resulting in increased wet-web strength.

### EXAMPLES

The following examples are presented to help understanding the present invention and to carry out the method for producing the said agricultural material sheets. These examples should be taken as illustrative and are not meant to limit the scope of the invention.

### Example 1 - CF in tobacco pulp

A dry pulp made from tobacco by-products, containing stems, scraps and fine-cuts, was obtained from a manufacturing company of reconstituted tobacco leaf after extraction and refining stages, and is referred to as tobacco pulp 1 hereafter. Unless otherwise specified, this tobacco pulp was dispersed before use by using a standard laboratory disintegrator according to PAPTAC Standard C.10.

Cellulose filaments (CF) are prepared according to the method disclosed in US 9,051,684, and with a consistency of about 30% and is referred to as a "never-dried CF" hereafter. Unless otherwise specified, the never-dried CF is dispersed using the same laboratory standard disintegrator as used for tobacco pulp, except that the CF temperature has been raised to about 80°C before the disintegration.

The CF after disintegration is then mixed with the tobacco pulp suspension under the following CF/tobacco ratio: 0/100, 1/99, 3/97, 6/94, 10/90. Unless otherwise specified, the ratios are all based on weight of oven-dried solids of each substance. The mixture of the CF/tobacco pulp is referred to as pulp blend hereafter.

Using the above prepared pulp blend prepared, tobacco sheets (100g/m²) were made and couched using the standard PAPTAC procedure (C4) except that a 400 mesh screen was used instead of 150 mesh. For measurement of wet-web strength of the tobacco sheets, a special sheet mold was applied over the forming wire to obtain 3 strips, each with a dimension of 2.5 × 12 cm. Couched sheets were separated into multi-groups. One group was maintained at the couch solids by placing the strips between polyethylene sheets in a sealed bag. The other groups were pressed for five minutes between blotters in a Carver press under varying pressure settings. Under these couch and press conditions, the resulting solids content of the sheets ranged between 20% and 65%. Standard PAPTAC method (D23P) was used to measure the strength properties of the above prepared wet webs.

Table 1 presents the tensile energy absorption (TEA) index values of CF-containing tobacco sheets at solid content of 40% and 60% as a function of CF ratio. The results show that applying CF substantially improves the TEA index of the tobacco wet-web, even at a very low dosage. The further improvement is achieved with increasing CF ratio in the tobacco pulp. For example, addition of 3 wt% CF to the tobacco pulp increased the TEA index of the tobacco web at a solid content of 40% from 6.3 mJ/g to 13 mJ/g, an improvement of 106%. While at a solid content of 60%, and TEA index was increased from 26 mJ/g to 56 mJ/g, an improvement of 115%. This example clearly illustrates the extraordinary performance of CF in improving the wet-web strength of tobacco web. It is also observed that CF performs even better at a lower solids content.

**Table 1 - TEA Index of wet-web made from CF/tobacco pulp blend**

| Ratio of CF/tobacco | 40% solids content | | 60% solids content | |
|---|---|---|---|---|
| | TEA Index (mJ/g) | Improvement, % | TEA Index (mJ/g) | Improvement, % |
| 0/100 (tobacco pulp 1) | 6.3 | | 26 | |
| 1/99 | 8.8 | 40 | 31 | 19 |
| 3/97 | 13 | 106 | 56 | 115 |
| 6/94 | 32 | 408 | 112 | 331 |
| 10/90 | 70 | 1011 | 150 | 477 |

### Example 2 - CF in tobacco pulp containing 10% wood fibers

As mentioned in the prior art section, wood fibers are typically used in making reconstituted tobacco leaf to improve its wet-web strength. A tobacco pulp sample containing 10% wood fibers was collected from a company manufacturing reconstituted tobacco leaf after extraction and refining stages. This wood fiber-containing tobacco pulp is referred to as tobacco pulp 2 hereafter.

The same CF as in Example 1 was used in this example. The tobacco pulp 2 and CF were disintegrated by the same method as described in Example 1. The CF was then blended with tobacco pulp 2 at a ratio of CF/tobacco pulp 2 varied from 0/100, 1/99, 3/97. Tobacco sheets (100 g/m²) were made from these pulp blends and then tested for wet-web strength following the same procedures of the Example 1.

Table 2 presents the TEA index values of the wet-web made from CF/tobacco pulp 2 at solid content of 40% and 60% as a function of CF ratio. In comparison with the data in Table 1, it can be seen that inclusion of 10% wood fibers increased the TEA of tobacco sheets from 6.3 to 8.9 mJ/g and from 26 to 42 mJ/g at a solids content of 40% and 60%, respectively. However, the same level of increase was reached by CF with only about 1-2% (or 1% to less than 3%) of addition levels (see Table 1). In addition, CF further improved the wet-web strength of tobacco sheets containing 10% wood fibers. For example, 136% and 50% of additional improvement were achieved only by 1% of CF at 40% and 60% of solids levels, respectively. It is very clear and surprising that CF is superior to the wood fibers in improving the wet-web strength of tobacco sheets. Much lower dosage of CF would be needed than that of wood fibers to achieve the same wet-web strength. Thus, CF has a clear advantage to reinforce tobacco products which may have to limit the inclusion of cellulose materials.

**Table 2 - TEA Index of wet-web made from CF/tobacco pulp 2 blend.**

| Ratio of CF/tobacco pulp 2 containing 10% wood fibers | 40% solids content | | 60% solids content | |
|---|---|---|---|---|
| | TEA Index (mJ/q) | Improvement, % | TEA Index (mJ/g) | Improvement, % |
| 0/100 | 8.9 | | 42 | |
| 1/99 | 21 | 136 | 63 | 50 |
| 3/97 | 26 | 192 | 74 | 76 |

### Example 3 - Dry strength of tobacco sheets reinforced by CF and wood fibers

Handsheets were prepared with tobacco pulps I and II in combination of various amounts of CF according to PAPTAC Standard C.4 except that a 400 mesh screen was used instead of 150 mesh. The CF and tobacco pulps were same as those used in examples 1 and 2. Their dry strength, as shown in Table 3, was tested according to PAPTAC Standard D.34. For comparison, their wet-web strength values are also listed in the same table.

**Table 3 - Wet-web and dry strength of tobacco sheets reinforced with CF and wood fibers**

| CF % | Wood fibers % | Wet-web at 40% solids | | Dry strength | |
|---|---|---|---|---|---|
| | | TEA Index (mJ/q) | Improvement % | TEA Index (mJ/g) | Improvement, % |
| 0 | 0 | 6.3 | | 5.4 | |
| 0 | 10 | 8.9 | 41 | 18.9 | 250 |
| 6 | 0 | 32 | 408 | 13.3 | 146 |
| 3 | 10 | 26 | 313 | 23.2 | 329 |

Table 3 illustrates the effect of CF and wood fibers on both wet-web and dry tensile energy absorption of tobacco sheets. CF brought more improvement in wet-web strength than in dry strength, while the wood fibers had an opposite relationship. The wet-web TEA increased by 408% with 6% CF while the dry strength was only improved by 146% with the same amount of CF. When 3% of CF was added into the tobacco pulp containing 10% wood fibers, the wet-web TEA increased from 8.9 to 26 mJ/g, an increase of 192%, but the dry strength was only increased by about 23%, from 18.9 mJ.g to 23.3 mJ/g. Thus CF provides opportunities to enhance substantially the wet-web strength of agriculture material sheets while only moderately increasing their dry strength.

### Example 4 - Fines retention of tobacco pulp during sheet forming

Tobacco pulp made from leaf and its remnants does not have a high amount of fibrous materials. The leaf shaped materials become fine debris or fragments after pulping and refining. The fibrous materials in tobacco pulp are also much shorter than wood fibers. These short fibrous materials and fine fragments in tobacco pulp are not easy to be retained on the screen or wire of sheet forming stage. A large portion of them will pass through the wire or screen. To effectively retain most of tobacco materials during handsheet preparation, we used 400 mesh screen instead of the standard 150 mesh screen. Table 4 shows the retention of tobacco materials containing varying amounts of CF when the 400 mesh screen was used.

**Table 4 - Retention values of tobacco materials using varying amounts of CF**

| | | | | |
|---|---|---|---|---|
| CF content (%) | 0 | 1 | 3 | 6 |
| Retention (%) | 79 | 85 | 83 | 96 |

It is observed from Table 4 that the addition of CF significantly increased the retention of the tobacco materials. Thus CF not only improves wet-web strength of agricultural sheet, and also help to retain these fine particles of agricultural materials on the screen, Increase in particle retention would reduce material loss and also the cost of the production.

### Example 5 - CF in rice paper

Never-dried CF is dispersed using a laboratory standard disintegrator according to PAPTAC Standard C.10 except that the CF slurry temperature has been raised to 80°C before the disintegration. Rice batter is prepared by mixing at ambient temperature (∼23°C) for 1 minute a flour mixture consisting of 80 wt% white rice, 10 wt% glutinous rice and 10 wt% tapioca with 0 - 2.0 wt% (on the flour mixture) of the dispersed CF and water at 10% consistency in a hand blender.

A sample of the rice batter (12.0 g od) is spread evenly on a non-stick 28 x 19 cm baking pan, steamed in a hot water bath (100°C) for 5 minutes, and then dried in a convection over at 40°C and 80 - 90% relative humidity until it reaches a dryness (solid content) of 80 - 85%. The basis weight of the resulting rice paper is 225±5 g/m².

The dry rice paper is cut into 24 mm × 118 mm strips and the tensile index and TEA index of the dry rice strips/sheets are measured according to PAPTAC Standard D34. Samples of the strips are also dipped into warm water (50 - 60°C) for 15 seconds before they are sponged with a damp towel to reach a strip moisture content of about 40% and the tensile index of the rewetted rice paper strips/sheets are measured according to PAPTAC Standard D10.

Tables 5 and 6 list the tensile and TEA index, standard deviations, and percentages of the tensile and TEA index increase of the dry rice sheet and of the rewetted rice sheet by CF, respectively. Addition of a very small amount of CF, for example, 1.0 wt% (on the flour mixture) to the rice batter increases the tensile and the TEA index of the dry rice sheet by 157% and 351%, respectively. It also increases the tensile and the TEA index of the rewetted rice sheet by 199% and 385%, respectively.

**Table 5 - Tensile and TEA index, standard deviations, and percentages of tensile and TEA index increase of dry rice sheet by CF**

| CF in dry rice sheet, % | Tensile Index | | | TEA index | | |
|---|---|---|---|---|---|---|
| | Tensile Index (Nm/g) | Standard deviation (Nm/g) | Tensile Index Increase, % | TEA Index (mJ/g) | Standard deviation (mJ/g) | TEA index increase, % |
| 0 | 4.68 | 2.34 | | 9.46 | 7.53 | |
| 0.5 | 9.22 | 4.88 | 97 | 31.5 | 28.24 | 233 |
| 1.0 | 12.03 | 1.55 | 157 | 42.62 | 10.57 | 351 |
| 2.0 | 15.84 | 2.81 | 238 | 71.54 | 23.27 | 656 |

**Table 6 - Tensile and TEA index, standard deviations, and percentages of tensile and TEA index increase of rewetted rice sheet by CF**

| CF in rewetted rice sheet, % | Tensile Index | | | TEA index | | |
|---|---|---|---|---|---|---|
| | Tensile Index (Nm/g) | Standard deviation (Nm/g) | Tensile Index Increase, % | TEA Index (mJ/g) | Standard deviation (mJ/g) | TEA index increase, % |
| 0 | 0.090 | 0.04 | | 2.10 | 2.14 | |
| 0.5 | 0.182 | 0.07 | 102 | 5.31 | 3.63 | 153 |
| 1.0 | 0.269 | 0.06 | 199 | 10.18 | 3.44 | 385 |
| 2.0 | 0.395 | 0.10 | 339 | 14.62 | 6.37 | 596 |

### Example 6 - CF in seaweed sheet

Never-dried CF is dispersed using a laboratory standard disintegrator according to PAPTAC Standard C.10 except that the CF slurry temperature has been raised to 80°C before the disintegration. Roasted seaweed sheet (Yaki Sushi Nori) is teared into small pieces and soaked in deionized water for 30 minutes at a consistency of 0.20%. The dispersed CF at 0.5 wt% (on seaweed) is added to the soaked roasted seaweed sheet pieces and dispersed with a Waring Commercial Blender (700G) for 30 seconds at a speed of 3000 rpm. Seaweed sheet (77 - 83 g/m²) containing 0.5 wt% of the CF is prepared on a standard British Sheet Machine and then dried in a 45°C oven overnight. In a separate experiment, seaweed sheet (77 - 82 g/m²) containing 0.0 wt% of the CF is prepared on a standard British Sheet Machine and then dried in a 45°C oven overnight. The tensile index of the dry seaweed sheets containing 0.5 and 0.0 wt% of the CF, respectively, are measured according to PAPTAC Standard D34.

Table 7 lists the tensile index, standard deviation, and percentage of the tensile index increase of the dry seaweed sheet by CF. Addition of 0.5 wt% (on seaweed) of CF to the seaweed slurry before seaweed sheet making increases the tensile index of the dry seaweed sheet by 22%.

**Table 7 - Tensile index, standard deviation, and percentage of tensile index increase of dry seaweed sheet by CF**

| CF in dry rice sheet, % | Tensile Index | | |
|---|---|---|---|
| | Tensile Index (Nm/g) | Standard deviation (Nm/g) | Tensile Index Increase, % |
| 0 | 23 | 4.3 | |
| 0.5 | 28 | 5.9 | 22 |

### Example 7 - CF for reconstituted tobacco leaf (RTL) sheet production on a commercial machine

Cellulose filaments (CF) were prepared at a consistency of about 30%. 300 kg (od basis) of the CF and 300 kg (od basis) of a northern bleached softwood kraft (NBSK) pulp were mixed using a high consistency refiner. The mixture of CF/NBSK (weight ratio: 50/50) was dispersed in the pulper of a commercial reconstituted tobacco leaf (RTL) paper machine at 2.0% consistency with the mill process water. The dispersed CF and NBSK were then pumped to the machine chest of the RTL paper machine where they were combined with a mixture of tobacco pulp, NBSK and precipitated calcium carbonate (PCC). The wt% ratio of tobacco pulp, NBSK, PCC and CF was 74/11/13/2 in the final RTL sheet forming slurry. The RTL sheet was then produced, coated and shredded. In a separate production of RTL sheet, 74/13/13/0 (instead of 74/11/13/2) wt% of tobacco pulp/NBSK/PCC/CF was used.

During the production of the RTL sheet with 74/11/13/2 wt% of tobacco pulp/NBSK/PCC/CF, less wet-end sheet break on the RTL paper machine and less dusting at the RTL shredding stage were observed than during the production of the RTL sheet with 74/13/13/0 wt% of tobacco pulp/NBSK/PCC/CF. Therefore, the use of CF improves the runnability of the RTL paper machine by increasing the wet-web strength of the RTL sheet. It was also observed that the use of CF improved the fines and filler retention in the RTL sheet. Table 8 lists the percentage increases of first pass retention, ash content, and cigarette filling capacity of the RTL sheet produced using 74/11/13/2 wt% of tobacco pulp/NBSK/PCC/CF over those of the RTL sheet produced using 74/13/13/0 wt% of tobacco pulp/NBSK/PCC/CF.

This commercial trial confirms that CF can be used to improve the wet-web strength, the first-pass retention and the ash content of reconstituted tobacco leaf (RTL) sheet. Furthermore, they can be used to improve cigarette filling capacity of the RTL sheet.

**Table 8 - Percentage increases of first pass retention, ash content, and cigarette filling capacity of the RTL sheet produced using 74/11/13/2 wt% of tobacco pulp/NBSK/PCC/CF over those of the RTL sheet produced using 74/13/13/0 wt% of tobacco pulp/NBSK/PCC/CF**

| Ratio of tobacco pulp/NBSK/PCC/CF (wt%) | First pass retention increase (%) | Ash content increase (%) | Cigarette filling capacity increase (%) |
|---|---|---|---|
| 74/13/13/0 | - | - | - |
| 74/11/13/2 | 3.0 | 1.0 | 25 |

## Claims

1. A method of producing a structurally enhanced agricultural material sheet comprising:
providing an agricultural material;
providing a CF (cellulose filaments) or CF-containing cellulose fibers;
preparing a slurry of the agricultural material, the CF or CF-containing cellulose fibers in an aqueous phase, and
transferring the slurry to a sheet forming device producing the structurally enhanced agricultural material sheet;
wherein CF have a width of 30 to 500 nm, a length of at least 10 µm and an aspect ratio of at least 200;
wherein the agricultural material is selected from the group consisting of vegetables, fruits, rice, seaweed, fungi, aquatic plants, tobacco, tea, coffee and combinations thereof.

2. The method of claim 1, wherein the structurally enhanced agricultural material comprises a characteristic flavour of the agricultural material.

3. The method according to claim 1 or 2, wherein the sheet forming device comprises a screen, a wire mesh or a forming fabric.

4. The method of any one of claims 1 to 3, wherein the agricultural material is rice or seaweed.

5. The method of any one of claims 1 to 4, wherein the providing of the CF or CF-containing cellulose fibers is in a never-dried state, an aqueous slurry, or is in a dry state.

6. The method of any one of claims 1 to 5, wherein the weight ratio of the CF to the agricultural material is less than 50:50 based on weight of dry solids; 0.1: 99.9 to 20:80 based on dry solids; or 0.5:99.5 to 10:90 based on dry solids.

7. A structurally enhanced agricultural material sheet comprising:
an agricultural material; and
a CF (cellulose filaments) or CF-containing cellulose fibers;
wherein CF have a width of 30 to 500 nm, a length of at least 10 µm and an aspect ratio of at least 200;
wherein the agricultural material is selected from the group consisting of vegetables, fruits, rice, seaweed, fungi, aquatic plants, tobacco, tea, coffee and combinations thereof.

8. The material of claim 7, wherein the structurally enhanced agricultural material comprises a characteristic flavour of the agricultural material.

9. The material of claim 7 or 8, wherein the agricultural material is rice or seaweed.

10. The material of any one of claims 7 to 9, wherein the agricultural material comprises cooking, macerating, pickling, pasteurization, fermentation, curing, roasting, drying, pulping, disintegrating, dispersing, grinding, refining, homogenizing, extracting or combinations thereof the agricultural material.

11. The material of any one of claims 7 to 10, wherein the CF or CF-containing cellulose fibers is in a never-dried state, an aqueous slurry, or is in a dry state.

12. A method of producing a structurally enhanced reconstituted tobacco leaf comprising:
providing a tobacco pulp blend made of tobacco leaf and remnants;
providing a CF (cellulose filaments) or CF-containing cellulose fibers;
preparing a slurry of the tobacco pulp and the CF or CF-containing cellulose fibers in an aqueous phase, and
transferring the slurry to a sheet forming device producing the structurally enhanced reconstituted tobacco leaf,
wherein CF have a width of 30 to 500 nm, a length of at least 10 µm and an aspect ratio of at least 200.

13. The method of claim 1 or 12, wherein the slurry comprises a weight ratio of less than 20 wt% of CF to the weight CF or CF-containing cellulose fibers and the agricultural material on a dry basis.

14. The method of claim 1 or 13, wherein the sheet forming device is a paper machine.

15. The method of claim 14, wherein the paper machine is a high speed paper machine operating at a speed of more than 80 m/min.

## Patentansprüche

1. Verfahren zur Herstellung eines Blatts aus strukturverstärktem landwirtschaftlichem Material, umfassend:
Bereitstellen eines landwirtschaftlichen Materials;
Bereitstellen von CF (Cellulosefilamente) oder CF-enthaltenden Cellulosefasern;
Herstellen einer Aufschlämmung des landwirtschaftlichen Materials, der CF oder CF-enthaltenden Cellulosefasern in einer wässrigen Phase; und
Überführen der Aufschlämmung in eine Blattbildungsvorrichtung, die das Blatt aus strukturverstärktem landwirtschaftlichem Material herstellt;
wobei die CF eine Breite von 30 bis 500 nm, eine Länge von wenigstens 10 µm und ein Aspektverhältnis von wenigstens 200 aufweisen;
wobei das landwirtschaftliche Material ausgewählt ist aus der Gruppe bestehend aus Gemüse, Früchten, Reis, Seetang, Pilzen, Wasserpflanzen, Tabak, Tee, Kaffee und Kombinationen davon.

2. Verfahren gemäß Anspruch 1, wobei das strukturverstärkte landwirtschaftliche Material ein charakteristisches Aroma des landwirtschaftlichen Materials aufweist.

3. Verfahren gemäß Anspruch 1 oder 2, wobei die Blattbildungsvorrichtung ein Sieb, ein Drahtnetz oder ein Formiersieb umfasst.

4. Verfahren gemäß einem der Ansprüche 1 bis 3, wobei das landwirtschaftliche Material Reis oder Seetang ist.

5. Verfahren gemäß einem der Ansprüche 1 bis 4, wobei das Bereitstellen der CF oder CF-enthaltenden Cellulosefasern in einem nie getrockneten Zustand, einer wässrigen Aufschlämmung oder in einem trockenen Zustand erfolgt.

6. Verfahren gemäß einem der Ansprüche 1 bis 5, wobei das Gewichtsverhältnis der CF zu dem landwirtschaftlichen Material kleiner als 50:50, bezogen auf das Trockenfeststoffgewicht; 0,1:99,9 bis 20:80, bezogen auf die Trockenfeststoffe; oder 0,5:99,5 bis 10:90, bezogen auf die Trockenfeststoffe, beträgt.

7. Blatt aus strukturverstärktem landwirtschaftlichem Material, umfassend:
ein landwirtschaftliches Material, und
CF (Cellulosefilamente) oder CF-enthaltende Cellulosefasern;
wobei die CF eine Breite von 30 bis 500 nm, eine Länge von wenigstens 10 µm und ein Aspektverhältnis von wenigstens 200 aufweisen;
wobei das landwirtschaftliche Material ausgewählt ist aus der Gruppe bestehend aus Gemüse, Früchten, Reis, Seetang, Pilzen, Wasserpflanzen, Tabak, Tee, Kaffee und Kombinationen davon.

8. Material gemäß Anspruch 7, wobei das strukturverstärkte landwirtschaftliche Material ein charakteristisches Aroma des landwirtschaftlichen Materials aufweist.

9. Material gemäß Anspruch 7 oder 8, wobei das landwirtschaftliche Material Reis oder Seetang ist.

10. Material gemäß einem der Ansprüche 7 bis 9, wobei das landwirtschaftliche Material Kochen, Mazerieren, Marinieren, Pasteurisieren, Fermentieren, Härten, Rösten, Trocknen, Aufschließen, Zerkleinern, Dispergieren, Mahlen, Raffinieren, Homogenisieren, Extrahieren oder Kombinationen davon des landwirtschaftlichen Materials umfasst.

11. Material gemäß einem der Ansprüche 7 bis 10, wobei die CF oder CF-enthaltenden Cellulosefasern in einem nie getrockneten Zustand, als wässrige Aufschlämmung oder in einem trockenen Zustand vorliegen.

12. Verfahren zur Herstellung eines strukturverstärkten rekonstituierten Tabakblatts, umfassend:
Bereitstellen eines Tabakpulpegemischs aus Tabakblättern und -rückständen;
Bereitstellen von CF (Cellulosefilamente) oder CF-enthaltenden Cellulosefasern;
Herstellen einer Aufschlämmung der Tabakpulpe und der CF oder CF-enthaltenden Cellulosefasern in einer wässrigen Phase; und
Überführen der Aufschlämmung in eine Blattbildungsvorrichtung, die das strukturverstärkte rekonstituierte Tabakblatt herstellt;
wobei die CF eine Breite von 30 bis 500 nm, eine Länge von wenigstens 10 µm und ein Aspektverhältnis von wenigstens 200 aufweisen.

13. Verfahren gemäß Anspruch 1 oder 12, wobei die Aufschlämmung ein Gewichtsverhältnis von kleiner als 20 Gew.-% von CF zu dem Gewicht von CF oder CF-enthaltenden Cellulosefasern und dem landwirtschaftlichen Material auf Trockenbasis aufweist.

14. Verfahren gemäß Anspruch 1 oder 13, wobei die Blattbildungsvorrichtung eine Papiermaschine ist.

15. Verfahren gemäß Anspruch 14, wobei die Papiermaschine eine Hochgeschwindigkeitspapiermaschine ist, die mit einer Geschwindigkeit von mehr als 80 m/min arbeitet.

## Revendications

1. Procédé de production d'une feuille de matière agricole structuralement améliorée comprenant :
la mise à disposition d'une matière agricole ;
la mise à disposition d'un CF (filaments de cellulose) ou de fibres de cellulose contenant un CF ;
la préparation d'une suspension de la matière agricole, le CF ou les fibres de cellulose contenant un CF étant dans une phase aqueuse, et
le transfert de la suspension à un dispositif de formation de feuille produisant la feuille de matière agricole structuralement améliorée ;
le CF possédant une largeur de 30 à 500 nm, une longueur d'au moins 10 µm et un rapport d'aspect d'au moins 200 ;
la matière agricole étant choisie dans le groupe constitué par des légumes, des fruits, du riz, des algues, des champignons, des végétaux aquatiques, du tabac, du thé, du café et des combinaisons correspondantes.

2. Procédé selon la revendication 1, la matière agricole structuralement améliorée comprenant un arôme caractéristique de la matière agricole.

3. Procédé selon la revendication 1 ou 2, le dispositif de formation de feuille comprenant un écran, une grille métallique ou une toile de formation.

4. Procédé selon l'une quelconque des revendications 1 à 3, la matière agricole étant du riz ou des algues.

5. Procédé selon l'une quelconque des revendications 1 à 4, la mise à disposition du CF ou des fibres de cellulose contenant un CF étant dans un état jamais séché, une suspension aqueuse, ou étant dans un état sec.

6. Procédé selon l'une quelconque des revendications 1 à 5, le rapport en poids du CF sur la matière agricole étant inférieur à 50 : 50 sur la base du poids de solides secs ; 0,1 : 99,9 à 20 : 80 sur une base de solides secs ; ou 0,5 : 99,5 à 10 : 90 sur une base de solides secs

7. Feuille de matière agricole structuralement améliorée comprenant :
une matière agricole ; et
un CF (filaments de cellulose) ou des fibres de cellulose contenant un CF ;
le CF possédant une largeur de 30 à 500 nm, une longueur d'au moins 10 µm et un rapport d'aspect d'au moins 200 ;
la matière agricole étant choisie dans le groupe constitué par des légumes, des fruits, du riz, des algues, des champignons, des végétaux aquatiques, du tabac, du thé, du café et des combinaisons correspondantes.

8. Matière selon la revendication 7, la matière agricole structuralement améliorée comprenant un arôme caractéristique de la matière agricole.

9. Matière selon la revendication 7 ou 8, la matière agricole étant du riz ou des algues.

10. Matière selon l'une quelconque des revendications 7 à 9, la matière agricole comprenant la cuisson, la macération, le saumurage, la pasteurisation, la fermentation, le durcissement, le rôtissage, le séchage, la réduction en pâte, la désintégration, la dispersion, le broyage, l'affinage, l'homogénéisation, l'extraction ou des combinaisons correspondantes de la matière agricole.

11. Matière selon l'une quelconque des revendications 7 à 10, le CF ou les fibres de cellulose contenant un CF étant dans un état jamais séché, une suspension aqueuse, ou étant dans un état sec.

12. Procédé de production d'une feuille de tabac reconstituée structuralement améliorée comprenant :
la mise à disposition d'un mélange de pâte de tabac composé de feuille de tabac et des résidus ;
la mise à disposition d'un CF (filaments de cellulose) ou de fibres de cellulose contenant un CF ;
la préparation d'une suspension de la pâte de tabac et du CF ou des fibres de cellulose contenant un CF dans une phase aqueuse, et
le transfert de la suspension à un dispositif de formation de feuille produisant la feuille de tabac reconstituée structuralement améliorée,
le CF possédant une largeur de 30 à 500 nm, une longueur d'au moins 10 µm et un rapport d'aspect d'au moins 200.

13. Procédé selon la revendication 1 ou 12, la suspension comprenant un rapport en poids inférieur à 20 % en poids de CF sur le poids du CF ou des fibres de cellulose contenant un CF et de la matière agricole sur une base sèche.

14. Procédé selon la revendication 1 ou 13, le dispositif de formation de feuille étant une machine à papier.

15. Procédé selon la revendication 14, la machine à papier étant une machine à papier à haute vitesse fonctionnant à une vitesse supérieure à 80 m/min.
